# EUROPÄISCHE PATENTSCHRIFT

(11) **EP 0 585 865 B1**
(45) Veröffentlichungstag und Bekanntmachung des Hinweises auf die Patenterteilung: **25.06.1997**
(21) Anmeldenummer: 93113866.3
(22) Anmeldetag: 31.08.1993
(51) Int. Cl.: F24F 3/14

(54) **Luftbefeuchter**
Air humidifier
Humidificateur d'air

(30) Priorität: 02.09.1992 DE 4229171
(43) Veröffentlichungstag der Anmeldung: 09.03.1994
(73) Patentinhaber: LTG LUFTTECHNISCHE GMBH, 70435 Stuttgart (DE)
(72) Erfinder: Schaal, Gerd-Eugen, Dr.-Ing., D-70567 Stuttgart (DE); Wenger, Paul, Dipl.-Ing., D-71254 Ditzingen (DE); Günther, Klaus, Dipl.-Ing., D-71299 Leonberg (DE)
(74) Vertreter: Grosse, Rainer, Dipl.-Ing.

(56) Entgegenhaltungen:
- US-A- 2 066 832

## Beschreibung

Die Erfindung betrifft einen Luftbefeuchter mit einer Befeuchtungseinrichtung, die von einem zu befeuchtenden Luftstrom durchsetzt wird und deren Befeuchtungsleistung durch Verändern von Befeuchtungsparametern einstellbar ist, sowie mit einem Feuchtigkeitsabscheider, insbesondere Wasserabscheider, zum Abscheiden von überschüssigen Tropfen aus dem befeuchteten Luftstrom, wobei der Feuchtigskeitsabscheider eine Luftstromumlenkung herbeiführende Lamellenwände aufweist und wobei die Positionen der Lamellenwände oder die Positionen von Teilen der Lamellenwände zum Einstellen des Abscheidegrades veränderbar sind.

Es ist bekannt, in Belüftungs- oder Klimaanlagen oder dergleichen Luftbefeuchter einzusetzen. Diese werden auch als "Wascher" bezeichnet. Die Funktionsweise in einer lufttechnischen Anlage (zum Beispiel in der erwähnten Belüftungs- beziehungsweise Klimaanlage) ist vom Prinzip her folgende: Mittels einer Luftförderanlage (zum Beispiel einem Ventilator) wird ein Luftstrom dem Luftbefeuchter zugeführt. In einer Kammer des Luftbefeuchters wird die Befeuchtung mit einer Flüssigkeit, insbesondere mit Wasser, vorzugsweise mit aufbereitetem Wasser, durchgeführt. Diese Kammer kann als Düsenkammer ausgebildet sein; sie weist eine Vielzahl von Sprühdüsen zum Verspritzen der Flüssigkeit auf. Dies erfolgt vorzugsweise in oder gegen die Luftströmungsrichtung. Die durch die Verdüsung entstehenden Wassertropfen werden vom Luftstrom mitgenommen und verdunsten dabei ganz oder teilweise. Die Geschwindigkeit der Verdunstung hängt von der Größe der Tropfen und der Relativgeschwindigkeit zwischen Wassertropfen und Luft und auch noch von weiteren Parametern ab. Um bei einem möglichst kurzen Strömungsweg -was einer kurzen Baulänge der Vorrichtung entspricht- eine möglichst hohe Befeuchtungsleistung zu erzielen (angestrebt ist eine Auffeuchtung der Luft auf 100% relative Feuchte und ggf. Übersättigung) wird wesentlich mehr Wasser in den Luftstrom gedüst als es zur Auffeuchtung nötig wäre. Bei bekannten Anlagen wird etwa die zehn- bis hundertfache Wassermenge eingesetzt. Das Überschußwasser muß aus dem Luftstrom wieder ausgeschieden werden, um nach dem Wascher Luft mit bis zu 100% relativer Feuchte, aber ohne freie Wassertropfen zu haben. Bleiben freie, große Wassertropfen zurück, so würde dies zu einer Befeuchtung anschließender Einrichtungen der lufttechnischen Anlage führen, was unerwünscht ist. Das Tropfenspektrum im Hinblick auf die Größe der einzelnen Tropfen ergibt sich in Abhängigkeit von der geometrischen Ausformung der Sprühdüse und auch aus dem Druck, mit dem die Flüssigkeit (insbesondere Wasser) verdüst wird. Je größer der Druck ist, um so feinere Tropfen (kleinere Tropfen) weist das erzeugte Tropfenspektrum auf. Dies ist günstig für den Stoffübergang zwischen Flüssigkeit und zu befeuchtender Luft, jedoch ungünstig für die anschließend vorzunehmende Abscheidung der überschüssigen Tropfen, da Tropfen mit kleiner Größe nur unzureichend von den bekannten Flüssigkeitsabscheidern abgeschieden werden. Aus diesem Grunde werden bei den bekannten Einrichtungen Flüssigkeitssprüheinrichtungen eingesetzt, die keine Tropfenspektren mit zu kleiner Tropfengröße aufweisen.

Aus dem US-Patent 2,066,832 ist ein Luftbefeuchter bekannt, der einen Feuchtigkeitsabscheider aufweist, welcher von Lamellenwänden gebildet ist. Ein Teil der Lamellenwände läßt sich zur Veränderung des Abscheidegrades mittels einer Hebelanordnung manuell verstellen. Sofern diese Verstellung nicht in jedem Betriebszustand konkret auf die vorliegenden Parameter abgestimmt ist, wird der Abscheidegrad nicht der Befeuchtungsleistung entsprechen, so daß eine Über- oder Unterfeuchtung auftritt.

Der Erfindung liegt daher die Aufgabe zugrunde, einen Luftbefeuchter der eingangs genannten Art zu schaffen, mit dem ein hoher Befeuchtungswirkungsgrad durch Einsatz nur einer geringen Wassermenge erzielbar ist.

Diese Aufgabe wird erfindungsgemäß dadurch gelöst, daß die Befeuchtungsparameter mittels Sensoren erfaßt und an eine Steuer- oder Regeleinrichtung gemeldet werden, die den Abscheidegrad des Feuchtigskeitsabscheiders in Abhängigkeit der Befeuchtungsparameter selbständig einstellt. Aufgrund dieser Maßnahme ist es möglich, je nach der vorliegenden Befeuchtungsleistung, insbesondere im Hinblick auf das jeweils vorliegende Tropfenspektrum, den Flüssigkeitsabscheider derart einzustellen, daß die überschüssigen Tropfen optimal aus dem befeuchteten Luftstrom ausgeschieden werden. Mithin können sehr gute Voraussetzungen für einen effektiven Stoffübergang geschaffen werden, wobei aufgrund der Erfindung dennoch sichergestellt ist, daß die überschüssige Flüssigkeit ausgeschieden wird, so daß die stromabwärts liegenden lufttechnischen Einrichtungen trocken bleiben. Es erfolgt eine selbsttätige Einstellung des Abscheidegrades des Flüssigkeitsabscheiders in Abhängigkeit von den Befeuchtungsparametern der Befeuchtungseinrichtung. Entsprechende Sensoren sind in der Lage, die Befeuchtungsparameter zu erfassen. Die Sensoren melden die Befeuchtungsparameter an eine Steuer- beziehungsweise Regeleinrichtung, die den Flüssigkeitsabscheider ansteuert.

Insbesondere ist es vorteilhaft, wenn -wie bereits erwähnt- der Abscheidegrad im Hinblick auf die abzuscheidende Tropfengröße variiert wird.

Nach einer Weiterbildung der Erfindung ist vorgesehen, daß die Befeuchtungseinrichtung -wie erwähnteine Flüssigkeitssprüheinrichtung ist, die in Abhängigkeit der Befeuchtungsparameter unterschiedliche Tropfenspektren versprüht, wobei der Abscheidegrad des Feuchtigkeitsabscheiders in Abhängigkeit der jeweils vorliegenden Tropfenspektren eingestellt wird.

Nach einem Ausführungsbeispiel ist vorgesehen, daß in Abhängigkeit des Sprühdruckes der Flüssigkeitssprüheinrichtung die Verstellung der Lamellenwände oder der Teile von diesen erfolgt. Wird der Sprühdruck sehr hoch gewählt, handelt es sich also um eine Hochdruckverdüsung, so werden Flüssigkeitsspektren mit extrem kleinen Tropfengrößen erzeugt. Diese kleinsten Tropfen wirken sich sehr positiv für den Stoffübergang, also im Hinblick auf die Verdunstung aus, so daß mit relativ wenig Wasser eine Luftstrombefeuchtung durchgeführt werden kann. Andererseits ist aufgrund der erfindungsgemäßen Ausgestaltung des Feuchtigkeitsabscheiders dennoch sichergestellt, daß auch die sehr kleinen Tropfen im Feuchtigkeitsabscheider abgeschieden werden können, so daß eine 100%-ige relative Feuchte erzielt werden kann, ohne daß dabei zu große, freie, nicht erwünschte Wassertropfen vorliegen. Aufgrund der Erfindung ist es überdies möglich, daß sich der Abscheidegrad des Feuchtigkeitsabscheiders derart einstellt, daß allerfeinste Tropfen den Feuchtigkeitsabscheider passieren können, so daß -in nachfolgenden Bereichen der lufttechnischen Anlagediese allerfeinste Tropfen noch verdunsten und vom Luftstrom aufgenommen werden, gleichwohl jedoch kein unzulässiger Feuchtigkeitsniederschlag eintritt.

Nach einer Weiterbildung der Erfindung ist vorgesehen, daß mindestens eine der Lamellenwände -in Strömungsrichtung des Luftstromes betrachtet- aus mehreren Abschnitten besteht, die zur Einstellung des Abscheidegrades flexibel miteinander gekoppelt und derart verlagerbar sind, daß sich die Winkel der Luftumlenkung vergrößern. Entsprechend lassen sich die Winkel der Luftumlenkung verkleinern, wenn diese Abschnitte zueinander auseinander gezogen werden. Durch das Zusammenschieben der Abschnitte wird der von den Lamellenwänden gebildete Labyrinthweg im Hinblick auf die Winkel der Luftumlenkung vergrößert, so daß entsprechend größere Fliehkräfte auftreten, wodurch auch noch sehr kleine Tropfen abgeschieden werden. Unter dem Begriff "Luftumlenkung" ist im Zuge dieser Anmeldung eine Änderung der Strömungsrichtung mit beliebig wählbarem Umlenkwinkel zu verstehen. Ist es nicht erforderlich, derart kleine Tropfen abzuscheiden, so können die Winkel der Luftumlenkung kleiner sein, was durch entsprechendes Auseinanderziehen der Abschnitte der Lamellenwände erzielt ist, da dann der Labyrinthweg weniger scharfe Biegungen aufweist.

Zusätzlich oder alternativ kann vorgesehen sein, daß die Lamellenwände aus mindestens zwei in Grundstellung aufeinanderliegenden Teilwänden etwa gleicher Kontur bestehen, die zur Einstellung des Abscheidegrades auseinander spreizbar, insbesondere winkelförmig zueinander auseinander spreizbar, sind. Vorzugsweise sind die beiden Teilwände einer Lamellenwand an ihrem dem Luftstrom zugewandten Ende miteinander über ein Scharnier oder dergleichen gekoppelt und können -zur Einstellung des Abscheidegrades- v-förmig auseinandergespreizt werden.

Zusätzlich oder alternativ besteht nach einer weiteren Ausführungsform die Möglichkeit, die Lamellenwände zur Einstellung des Abscheidegrades mit abklappbaren Luftstrom-Verdrängungskörpern auszustatten. Je nach dem, wie weit diese Luftstrom-Verdrängungskörper von der jeweiligen Lamellenwand abgespreizt werden, wird sich eine mehr oder weniger große Luftverwirbelung und damit Fliehkraftveränderung einstellen.

Die Zeichnung veranschaulicht die Erfindung anhand von mehreren Ausführungsbeispielen und zwar zeigt:
- Figur 1: eine schematische Ansicht eines Schnittes durch eine Düsenkammer eines Luftbefeuchters mit Feuchtigkeitsabscheider,
- Figuren 2 bis 4: ein Ausführungsbeispiel eines Feuchtigkeitsabscheiders in verschiedenen Stellungen,
- Figuren 5 und 6: ein weiteres Ausführungsbeispiel eines Feuchtigkeitsabscheiders in unterschiedlichen Stellungen und
- Figuren 7 bis 9: ein letztes Ausführungsbeispiel eines Feuchtigkeitsabscheiders in Stellungen mit unterschiedlichem Abscheidegrad.

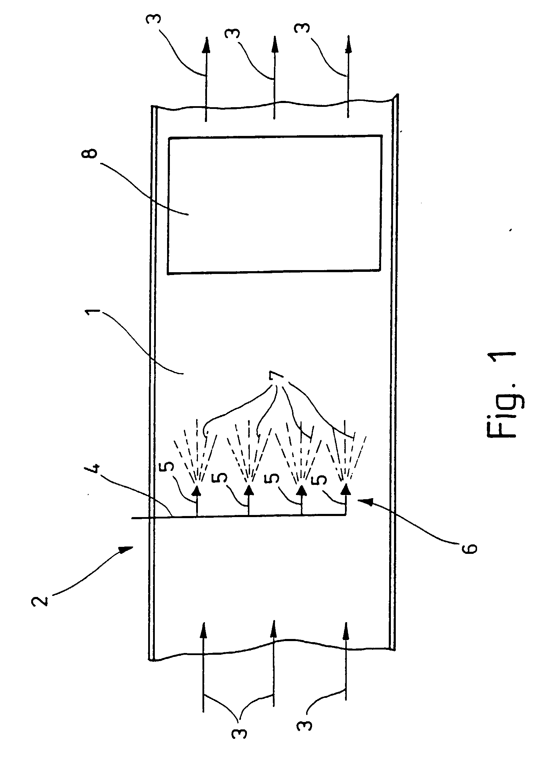

Die Figur 1 zeigt -in schematischer Darstellungeinen Längsschnitt durch eine Düsenkammer 1 eines Luftbefeuchters 2. Der Luftbefeuchter 2 ist Teil einer lufttechnischen Einrichtung, von der nähere Einzelheiten in Figur 1 nicht dargestellt sind; vielmehr zeigt diese Figur lediglich einen Abschnitt der Gesamtanordnung. Der Düsenkammer 1 wird ein Luftstrom 3 mittels einer nicht dargestellten Transportvorrichtung (zum Beispiel einem Ventilator) zugeführt. In der Düsenkammer 1 ist ein Hochdruck-Rohrleitungsnetz 4 angeordnet, an das flächenmatrixförmig angeordnete Sprühdüsen 5 einer Flüssigkeitssprüheinrichtung 6 angeschlossen sind. Die Speisung der Sprühdüsen 5 erfolgt mittels einer nicht dargestellten Hochdruckpumpe, deren Förderdruck und damit Fördermenge regelbar beziehungsweise steuerbar ist. Im Betrieb bildet jede Sprühdüse 5 einen Flüssigkeits-Sprühkegel 7 aus, der in Richtung des Luftstrom 3 liegt. Bei der versprühten Flüssigkeit handelt es sich vorzugsweise um Wasser, insbesondere um aufbereitetes Wasser, mit dem der zugeführte Luftstrom 3 angefeuchtet wird.

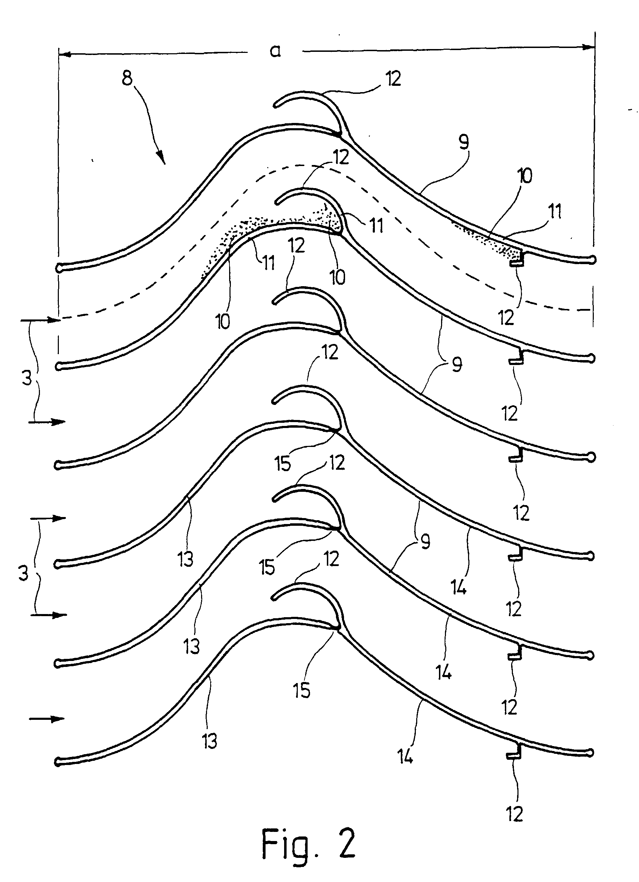

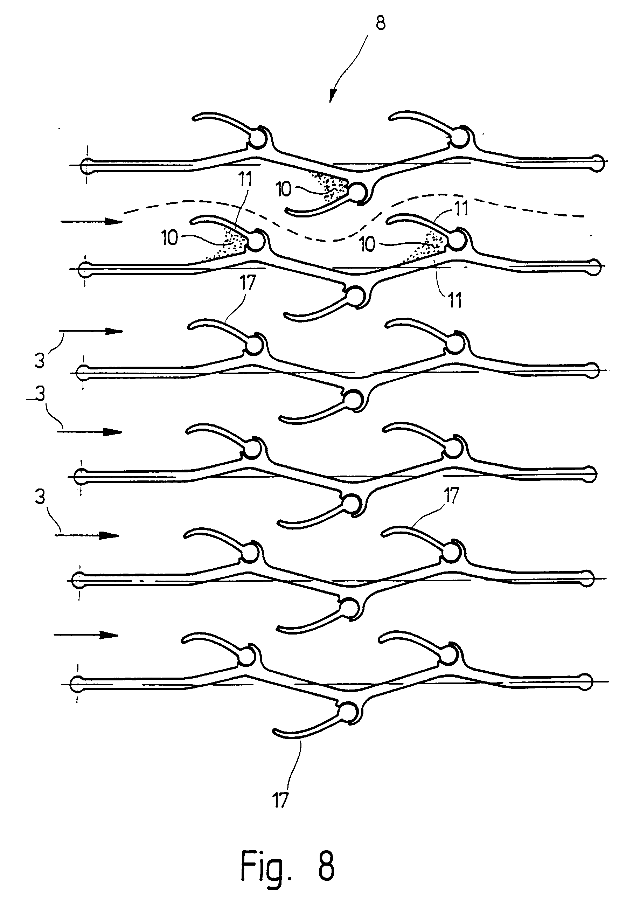

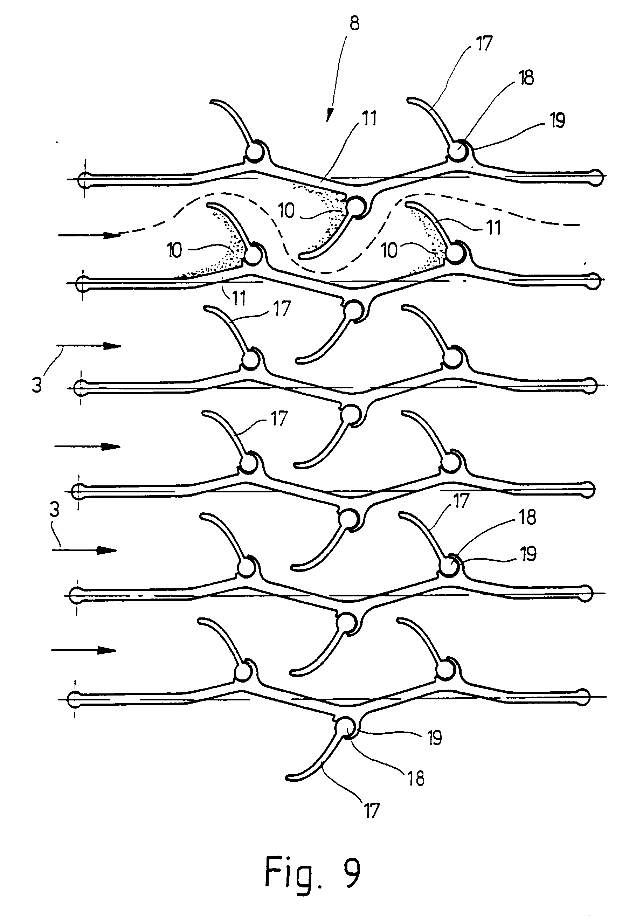

Stromab der Flüssigkeitssprüheinrichtung 6 ist ein Feuchtigkeitsabscheider 8 angeordnet, der als Wasserabscheider ausgebildet ist. Gemäß der Figuren 2 bis 9 weist der Wasserabscheider Lamellenwände 9 auf, die eine Umlenkung des befeuchteten Luftstromes 3 herbeiführen, wodurch im Luftstrom 3 befindliche, überschüssige Tropfen an Bereiche der Lamellenwände 9 geschleudert und dadurch abgeschieden werden. Um eine möglichst kurze Baulänge der Düsenkammer 1 zu erzielen, führt die Flüssigkeitssprüheinrichtung 6 eine wesentlich größere Wassermenge dem Luftstrom 3 zu, als dieses zur Auffeuchtung auf vorzugsweise 100% relative Feuchte erforderlich ist. Bei der erfindungsgemäßen Vorrichtung ist diese zugeführte Wassermenge jedoch wesentlich kleiner als bei Vorrichtungen des Standes der Technik. Der Wasserabscheider arbeitet derart, daß er überschüssige Tropfen dem Luftstrom 3 entzieht, so daß der zu weiteren Einrichtungen der lufttechnischen Anlage gelangende Luftstrom 3 zwar eine 100%ige relative Feuchte aufweist, jedoch keine freien Wassertropfen unzulässiger Größe mehr beinhaltet. Zulässig sind lediglich feinste Wassertropfen, die im Zuge der weiteren Luftstromführung noch verdunsten und dazu beitragen, daß eine sehr hohe Luftfeuchtigkeit besteht, jedoch kein Feuchtigkeitsniederschlag erfolgt.

In den Ausführungsbeispielen der Figuren 2 bis 4 werden Lamellenwände 9 eines Feuchtigkeitsabscheiders 8 gezeigt, die einen wellenförmigen Verlauf haben. Die einzelnen Lamellenwände 9 liegen beabstandet zueinander, so daß der Luftstrom 3 zwischen ihnen einen labyrinthförmigen Weg passiert. Durch die Umlenkung des Luftstromes 3 aufgrund der Wellenform werden freie Tropfen 10 des Luftstromes 3 an die Krümmungsinnenflächen geschleudert, das heißt, sie werden an Bereichen 11 der Lamellenwände 9 abgeschieden und von dort aus gesammelt und zur Flüssigkeitssprüheinrichtung 6 rückgeführt. An den Lamellenwänden 9 sind Verdrängungsstege 12 angeordnet, wodurch als Wasserabführrinnen arbeitende Hohlräume ausgebildet werden. Hier sammeln sich bevorzugt die Tropfen 10. In den Figuren 2 bis 9 ist der Luftströmungsweg lediglich nur jeweils einmal im Bereich zwischen zwei Lamellenwänden 9 angedeutet und es sind auch nur dort die freien Tropfen 10 gezeigt. Selbstverständlich erfolgt die Luftumlenkung und die Tropfenansammlung an jeder der Lamellenwände, was jedoch der Einfachheit halber nicht dargestellt ist.

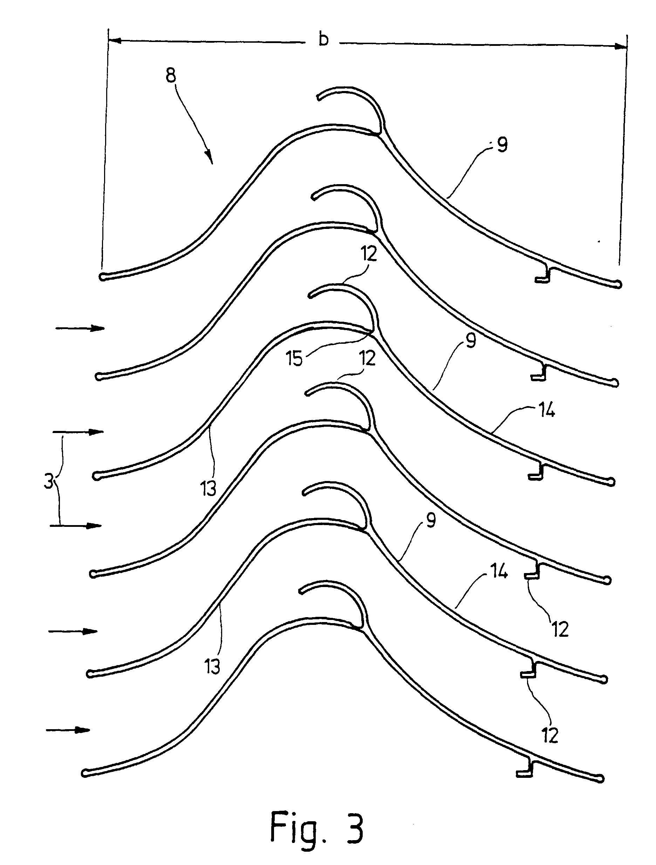

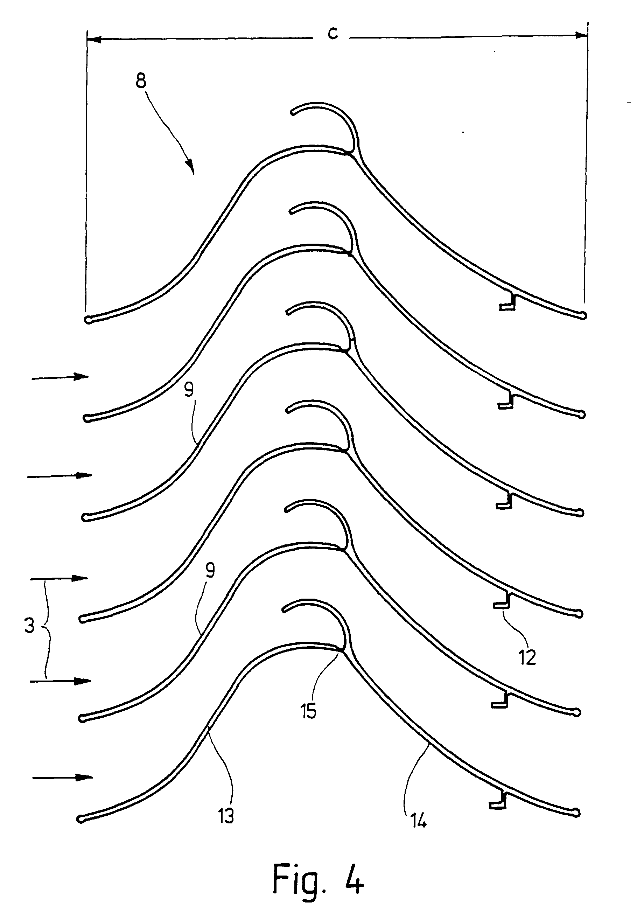

Die Figur 2 zeigt, daß jede Lamellenwand 9 aus zwei Abschnitten 13 und 14 besteht, die über eine Gelenkstelle 15 flexibel miteinander verbunden sind. Mittels einer geeigneten, nicht dargestellten Verstelleinrichtung lassen sich diese beiden Abschnitte 13 und 14 jeder Lamellenwand 9 aufeinander zu bewegen, so daß sich das in der Figur 2 eingezeichnete Maß a auf den Abstand b beziehungsweise c der Figuren 3 und 4 verkürzt, wobei a > b > c ist. Hierdurch vergrößern sich die Winkel der Luftumlenkung, wodurch der Abscheidegrad des Feuchtigkeitsabscheiders 8 verändert wird. Diese Veränderung erfolgt insbesondere im Hinblick auf die abzuscheidende Tropfengröße. Je größer die Winkel der Luftumlenkung sind, um so kleinere Tropfen werden noch abgeschieden.

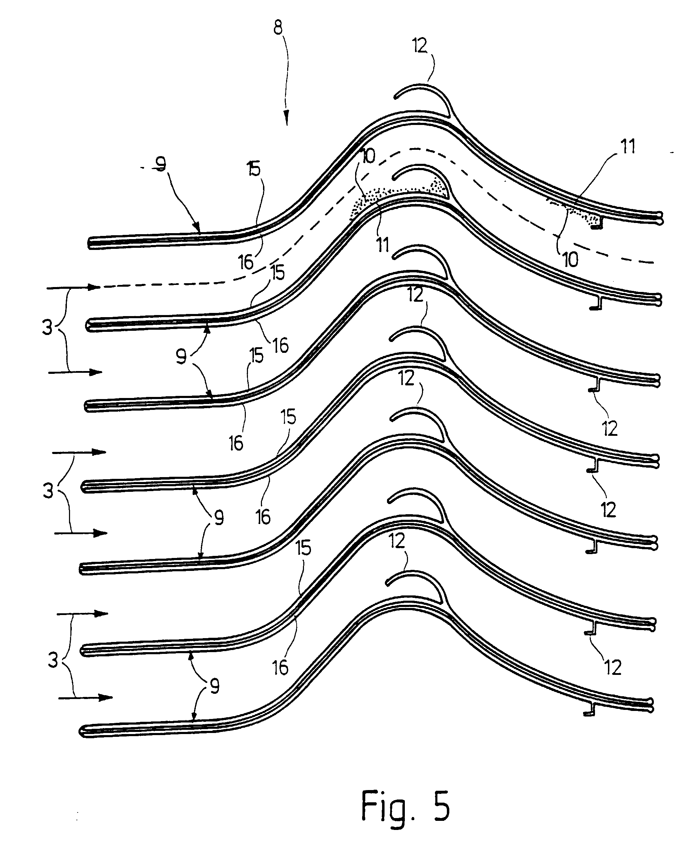

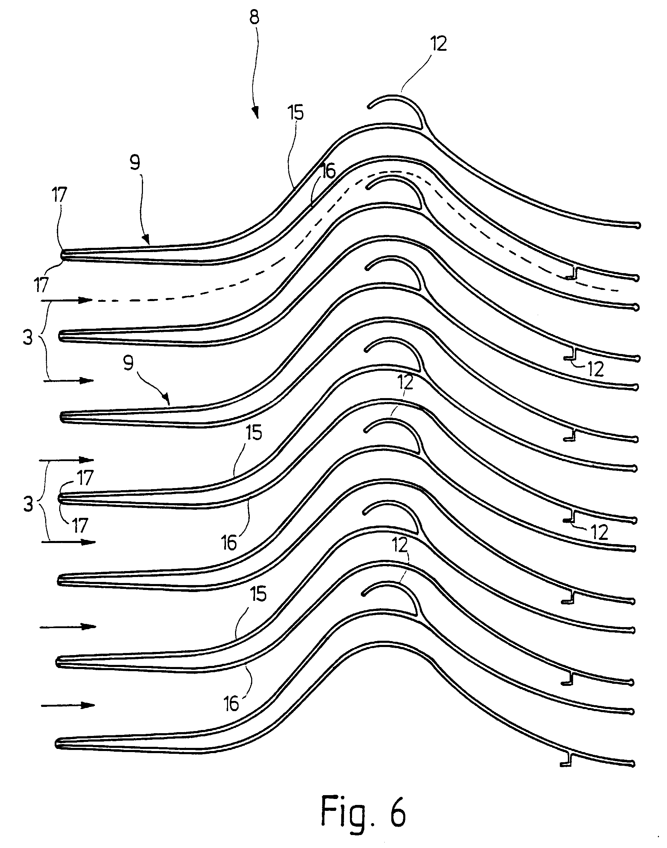

Die Figuren 5 und 6 zeigen ein weiteres Ausführungsbeispiel eines Feuchtigkeitsabscheiders 8, bei dem die Lamellenwände 9 aus zwei in Grundstellung (Figur 5) aufeinanderliegenden Teilwänden 15 und 16 bestehen. Beide Teilwände 15 und 16 weisen die gleiche wellenförmige Kontur auf; die einzelnen jeweils aus den Teilwänden 15 und 16 bestehenden Lamellenwände 9 sind gleichmäßig voneinander beabstandet angeordnet, so daß zwischen ihnen eine entsprechende Luftumlenkung des Luftstromes 3 erfolgt. An den Teilwänden 15 und 16 sind -ebenfalls wie beim zuvor beschriebenen Ausführungsbeispiel- Verdrängungsstege 12 angeordnet.

Ein Vergleich der Figuren 5 und 6 zeigt, daß die beiden Teilwände 15 und 16 jeder Lamellenwand 9 auseinandergespreizt werden können, derart, daß sie winkelförmig zueinander verlaufen. Hierzu sind sie an ihren dem Luftstrom 3 entgegengerichteten Enden 17 flexibel miteinander verbunden. Das Auseinanderspreizen der Teilwände 15 und 16 hat zur Folge, daß sich der Luftumlenkweg verändert. Er wird einerseits enger und weist andererseits auch größere Luftumlenkwinkel auf. Je weiter die Teilwände 15 und 16 auseinandergespreizt sind, um so kleinere Tropfen des vom Luftstrom 3 mitgenommenen Tropfenspektrums werden abgeschieden.

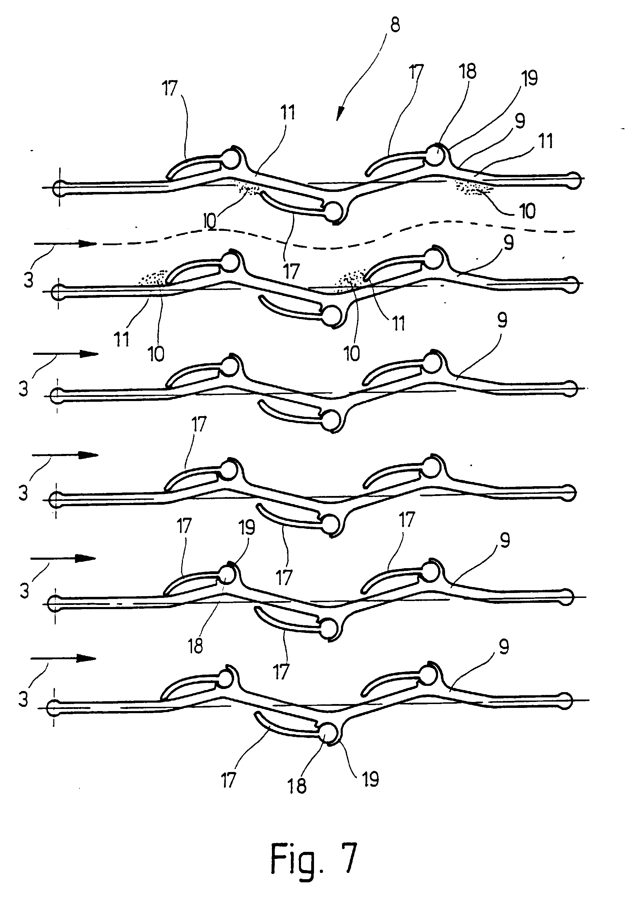

Die Figuren 7 bis 9 zeigen ein letztes Ausführungsbeispiel eines Flüssigkeitsabscheiders 8, mit beabstandet voneinander angeordneten Lamellenwänden 9, an denen abklappbare Luftstrom-Verdrängungskörper 17 beidseitig angeordnet sind. Die Luftstrom-Verdrängungskörper 17 sind als Leitschaufeln ausgebildet, die an ihrem Befestigungsende einen im Querschnitt etwa kreisförmigen Wulst 18 aufweisen, der in einer Wulstpfanne 19 an der entsprechenden Lamellenwand 9 schwenkbeweglich aufgenommen ist. Mittels einer nicht dargestellten, geeigneten Verstelleinrichtung lassen sich hierdurch die Luftstrom-Verdrängungskörper 17 mehr oder weniger weit von der eigentlichen Lamellenwand 9 abspreizen, so daß der Luftweg zwischen den einzelnen Lamellenwänden 9 entsprechend verengt und der Luftstrom mit entsprechend anderen Winkeln umgelenkt wird. Je weiter die Abspreizung der Luftstrom-Verdrängungskörper 17 erfolgt, um so kleinere Tropfen des vom Luftstrom 3 mitgeführten Tropfenspektrums werden abgeschieden.

Alle gezeigten Ausführungsbeispiele arbeiten nach dem gleichen Prinzip. Es erfolgt eine Flüssigkeitsversprühung (Wasserzerstäubung) mittels der Flüssigkeitssprüheinrichtung 6 unter Hochdruck, so daß Spektren feinster Tröpfchen erzeugt werden. Diese feinen Tropfen führen zu einem sehr intensiven Stoffübergang (Verdunstung) zum Luftstrom 3, das heißt, dieser wird trotz der Zuführung einer nur relativ geringen Wassermenge auf 100% relative Feuchte aufgefeuchtet. Der jeweils nachfolgende Flüssigkeitsabscheider 8 ist aufgrund der bei den verschiedenen Ausführungsbeispielen erläuterten Verstellmöglichkeiten in der Lage, entsprechend dem vorliegendem Tropfenspektrum derart eingestellt zu werden, daß eine optimale Feuchtigkeitsabscheidung vorliegt. Das Tropfenspektrum läßt sich mit dem Sprühdruck verändern. Je höher der Sprühdruck der Flüssigkeitssprüheinrichtung 6 ist, um so kleinere Tröpfchen werden erzeugt. In entsprechender Weise wird der Wasserabscheider eingestellt, so daß er einen Abscheidegrad aufweist, der dem vorliegenden Tropfenspektrum, das heißt, der vorliegenden Größe des Spektrums der Wassertropfen, entspricht. Damit kann also der Abscheider dem sich bei unterschiedlichen Betriebszuständen ändernden feinen Tropfenspektrum angepaßt werden. Vorzugsweise kann derart vorgegangen werden, daß der Abscheider so eingestellt wird, daß extrem feine Tropfen aus der Hochdruckverdüsung durch den Abscheider hindurchgehen. Diese Tropfen sind dann so fein, daß sie im nachfolgenden Kanalsystem im Anschluß an den Befeuchter nachverdunsten, ohne daß sich ein Wasserniederschlag an den Kanalinnenwänden bildet (die Kanäle bleiben also trocken). Damit kann bei konstanter Luftmenge eine wesentlich höhere Befeuchtungsleistung erzielt werden. Vorzugsweise kann der Betriebsdruck der Flüssigkeitssprüheinrichtung 6 im Bereich zwischen 20 und 300 bar liegen. Wie erwähnt, ändert sich das Tropfenspektrum je nach dem, welcher Düsendruck eingestellt wird. In entsprechender Weise wird der Feuchtigkeitsabscheider 8 mittels einer geeigneten Regeleinrichtung beziehungsweise Steuereinrichtung selbsttätig mitverstellt.

## Patentansprüche

1. Luftbefeuchter (2) mit einer Befeuchtungseinrichtung, die von einem zu befeuchtenden Luftstrom durchsetzt wird und deren Befeuchtungsleistung durch Verändern von Befeuchtungsparametern einstellbar ist, sowie mit einem Feuchtigkeitsabscheider (8), insbesondere Wasserabscheider, zum Abscheiden von überschüssigen Tropfen aus dem befeuchteten Luftstrom, wobei der Feuchtigkeitsabscheider (8) eine Luftstromumlenkung herbeiführende Lamellenwände (9) aufweist und wobei die Positionen der Lamellenwände (9) oder die Positionen von Teilen der Lamellenwände (9) zum Einstellen des Abscheidegrades veränderbar sind, **dadurch gekennzeichnet,** daß die Befeuchtungsparameter mittels Sensoren erfaßt und an eine Steuer- oder Regeleinrichtung gemeldet werden, die den Abscheidegrad des Feuchtigkeitsabscheiders (8) in Abhängigkeit der Befeuchtungsparameter selbständig einstellt.

2. Luftbefeuchter nach Anspruch 1, **dadurch gekennzeichnet,** daß der Abscheidegrad im Hinblick auf die abzuscheidende Tropfengröße variiert wird.

3. Luftbefeuchter nach einem der vorhergehenden Ansprüche, **dadurch gekennzeichnet,** daß die Befeuchtungseinrichtung eine Flüssigkeitssprüheinrichtung (6) aufweist, die in Abhängigkeit der Befeuchtungsparameter unterschiedliche Tropfenspektren mit sich entsprechend mitveränderten Tropfengrößen versprüht, wobei der Abscheidegrad des Feuchtigkeitsabscheiders (8) in Abhängigkeit der jeweils vorliegenden Tropfenspektren eingestellt wird.

4. Luftbefeuchter nach einem der vorhergehenden Ansprüche, **dadurch gekennzeichnet,** daß in Abhängigkeit des Sprühdruckes der Flüssigkeitssprüheinrichtung (6) die Verstellung der Lamellenwände (9) oder der Teile von diesen erfolgt.

5. Luftbefeuchter nach einem der vorhergehenden Ansprüche, **dadurch gekennzeichnet,** daß mindestens eine der Lamellenwände (9) -in Strömungsrichtung des Luftstromes (3) betrachtet- aus mehreren Abschnitten (13,14) besteht, die zur Einstellung des Abscheidegrades flexibel miteinander gekoppelt und in Richtung aufeinander derart verlagerbar sind, daß sich die Winkel der Luftumlenkung vergrößern.

6. Luftbefeuchter nach einem der vorhergehenden Ansprüche, **dadurch gekennzeichnet,** daß die Lamellenwände (9) aus mindestens zwei in Grundstellung aufeinanderliegenden Teilwänden (15,16) etwa gleicher Kontur bestehen, die zur Einstellung des Abscheidegrades auseinanderspreizbar, insbesondere winkelförmig zueinander auseinanderspreizbar, sind.

7. Luftbefeuchter nach einem der vorhergehenden Ansprüche, **dadurch gekennzeichnet,** daß die Lamellenwände (9) zur Einstellung des Abscheidegrades abklappbare Luftstrom-Verdrängungskörper (17) aufweisen.

8. Luftbefeuchter nach einem der vorhergehenden Ansprüche, **dadurch gekennzeichnet,** daß die Flüssigkeitssprüheinrichtung (6) eine Hochdruck-Flüssigkeitssprüheinrichtung mit einstellbarem Sprühdruck ist.

## Claims

1. An air humidifier (2) comprising a humidifying arrangement, through which flows a stream of air to be humidified and the humidifying capacity of which is adjustable by changing the humidification parameters, and comprising a moisture separator (8), in particular a water separator, for separating excess drops from the humidified air stream, wherein the moisture separator (8) has fin-type walls (9) causing deflection of the air stream, and wherein the positions of the fin-type walls (9) or the positions of parts of the fin-type walls (9) are variable for adjustment of the degree of separation, characterised in that the humidification parameters are detected by means of sensors and are relayed to a control or regulating device which automatically adjusts the degree of separation by the moisture separator (8) as a function of the humidification parameters.

2. An air humidifier according to claim 1, characterised in that the degree of separation is varied according to the size of the drops to be separated.

3. An air humidifier according to either one of the preceding claims, characterised in that the humidifying arrangement has a liquid-spraying device (6) spraying different drop spectra with drop sizes correspondingly co-varied as a function of the humidification parameters, the degree of separation by the moisture separator (8) being adjusted as a function of the respective drop spectra.

4. An air humidifier according to any one of the preceding claims, characterised in that the adjustment of the fin-type walls (9) or the parts thereof is carried out as a function of the spraying pressure of the liquid-spraying device (6).

5. An air humidifier according to any one of the preceding claims, characterised in that at least one of the fin-type walls (9) - viewed in the direction of flow of the air stream (3) - comprises a plurality of portions (13, 14) which, for adjustment of the degree of separation, are flexibly interconnected and displaceable towards one another in such a manner that the air deflection angles are increased.

6. An air humidifier according to any one of the preceding claims, characterised in that the fin-type walls (9) comprise at least two sub-walls (15, 16) of substantially the same shape and resting on top of each other in the starting position, the sub-walls (15, 16) being movable apart, in particular at an angle to one another, for adjustment of the degree of separation.

7. An air humidifier according to any one of the preceding claims, characterised in that the fin-type walls (9) have pivotable airstream displacement bodies (17) for adjustment of the degree of separation.

8. An air humidifier according to any one of the preceding claims, characterised in that the liquid-spraying device (6) is a highpressure liquid-spraying device with adjustable spraying pressure.

## Revendications

1. Humidificateur d'air (2) avec un dispositif d'humidification qui est traversé par un courant d'air à humidifier et dont la puissance d'humidification est réglable par variation de paramètres d'humidification, ainsi qu'avec un séparateur d'humidité (8), en particulier un séparateur d'eau, pour effectuer la séparation des gouttes en excès à partir du courant d'air humidifié, le séparateur d'humidité (8) présentant des parois en lamelles (9) provoquant un changement de direction de l'écoulement d'air et les positions des parois en lamelles (9), ou les positions de parties des parois en lamelles (9) étant modifiables pour régler le degré de séparation, caractérisé en ce que les paramètres d'humidification sont saisis au moyen de capteurs et sont transmis à un dispositif de commande ou de régulation qui règle le degré de séparation du séparateur d'humidité (8) en fonction des paramètres d'humidification.

2. Humidificateur d'air selon la revendication 1, caractérisé en ce que le degré de séparation est modifié en fonction de la taille des gouttes à séparer.

3. Humidificateur d'air selon l'une des revendications précédentes, caractérisé en ce que le dispositif d'humidification présente un dispositif d'aspersion de liquide (6) qui pulvérise, en fonction des paramètres d'humidification de différents spectres de gouttes, des tailles de gouttes variant conjointement de manière correspondante avec ces spectres, le degré de séparation du séparateur d'humidité (8) étant réglé en fonction des spectres de gouttes se présentant chaque fois.

4. Humidificateur d'air selon l'une des revendications précédentes, caractérisé en ce que le réglage des parois en lamelles ou des parties de celles-ci s'effectue en fonction de la pression de pulvérisation du dispositif d'aspersion de liquide (6).

5. Humidificateur d'air selon l'une des revendications précédentes, caractérisé en ce qu'au moins l'une des parois en lamelles (9) - en observant dans la direction de l'écoulement d'air (3) - est constituée de plusieurs tronçons (13, 14) qui sont couplés ensemble de manière flexible pour obtenir le réglage du degré de séparation et qui sont déplaçables en direction l'un de l'autre, de manière à augmenter les angles de la déviation de l'air.

6. Humidificateur d'air selon l'une des revendications précédentes, caractérisé en ce que les parois en lamelles (9) sont constituées d'au moins deux parois partielles (15, 16), placées l'une sur l'autre en position de base et ayant à peu près le même contour, susceptibles d'être écartées l'une de l'autre pour obtenir le réglage du degré de séparation, en particulier susceptibles d'être écartées l'une de l'autre en formant entre elles un angle.

7. Humidificateur d'air selon l'une des revendications précédentes, caractérisé en ce que les parois en lamelles (9) présentent des corps de refoulement d'écoulement d'air (17) susceptibles d'être rabattus, pour obtenir le degré de séparation.

8. Humidificateur d'air selon l'une des revendications précédentes, caractérisé en ce que le dispositif d'aspersion de liquide (6) est un dispositif d'aspersion de liquide travaillant à haute pression, dont la pression de pulvérisation est réglable.
